# EUROPEAN PATENT SPECIFICATION

(11) **EP 2 691 309 B1**
(45) Date of publication and mention of the grant of the patent: **10.02.2021**
(21) Application number: 12764375.7
(22) Date of filing: 30.03.2012
(51) Int. Cl.: B65D 33/00, B32B 5/00, B32B 5/02, B32B 7/00, B32B 7/02, B32B 7/04, B32B 7/12, B32B 27/00, B32B 1/00, B32B 1/04, B32B 1/08, B32B 3/00, B32B 3/02, B32B 3/06, B32B 3/14, B32B 3/18, B32B 27/02, B32B 27/08, B32B 27/12, B32B 27/32, B32B 27/36

(54) **PACKAGE HAVING A PRINTED LAMINATE**
VERPACKUNG MIT EINEM BEDRUCKTEN LAMINAT
EMBALLAGE POURVU D'UN STRATIFIÉ IMPRIMÉ

(30) Priority: 31.03.2011 US 201113076983
(43) Date of publication of application: 05.02.2014
(73) Proprietor: Coating Excellence International, LLC, Wrightstown, WI 54180 (US)
(72) Inventor: NOWAK, Michael, R., Seymour, WI 54165 (US); KOHL, Cori, K., Appleton, WI 54915 (US)
(74) Representative: Strehl Schübel-Hopf & Partner
(86) International application number: PCT/US2012/031543
(87) International publication number: WO 2012/135674

(56) References cited:
- WO-A1-2008/094901
- US-A1- 2004 191 438
- US-A1- 2007 116 910
- US-A1- 2008 187 695
- US-A1- 2008 187 695
- US-A1- 2009 092 777
- US-A1- 2009 092 777
- US-A1- 2011 176 753

## Description

### FIELD OF THE INVENTION

The invention relates to a laminated package or bag for packaging food and non-food items, and methods for making the same.

### BACKGROUND

Typically woven bags are a reverse printed film poly (polymer) laminated by poly adhesive to a woven material to provide a structure (film/print/poly/woven). When the bags are filled with food (human and animal) products they frequently are filled hot and with grease added. As a result the moisture or grease or heat can attack the printing by migration through the poly and woven layers. Moreover, the printed film is subject to abrasion by the woven bag.

U.S. 7,111,986 discloses a package that utilizes a reverse printed film adhesive laminated to another film. This would be film/print/adhesive/film. Such a package is used for ream wrap and packaging cosmetics, and a variety of foods from potato chips, to pouches for a variety of edibles, such as, soup and dog treats.

### SUMMARY OF THE INVENTION

The present invention provides a woven bag and a method of its production as defined in the appended claims.

The woven bag according to the present invention comprises:
- an exterior, first polymer film (10);
- an interior facing surface of the first polymer film (10) having reverse printed matter (10a) thereon;
- a woven bag material (60);
- a second polymer film (30) laminated with a first adhesive layer (20) thereon and laminated by the first adhesive layer (20) to an interior facing surface of the woven bag material (60),
- a second adhesive layer (50) laminating the woven bag material (60) and the interior facing surface of the first polymer film (10) having the reverse printed matter (10a) thereon; and
- the second polymer film (30) laminated with the first adhesive layer (20) thereon supports the interior facing surface of the woven bag material (60) preventing the woven bag material from slumping or collapsing while the bag is open and standing upright.

In previously published applications of the proprietor, such as US 2008/0187695 A1 and US 2009/092777 A1, a package is fabricated with a first polymer film having reverse printed matter thereon, a second polymer film laminated to the first polymer film to provide a composite, wherein the printed matter is between the first and second polymer films, and a woven bag enclosed by the composite, wherein the second polymer film of the composite isolates the printed matter from cross contamination with contents intended for the woven bag.

According to an embodiment of this previous invention, a combination of film/print/poly film/woven comprises an improvement over a package constructed of poly (polymer) film adhesive or poly laminated to woven.

Films laminated together are poly laminated by heating, melting and fusion of a poly film, or they are laminated together by being adhesive laminated to each other and to the woven bag. The second layer of poly film with the printing buried between two layers protects the print by providing a higher barrier to moisture and grease cross contamination, in addition to providing a supplemental barrier layer for the bag to resist opening of the bag by penetration of the printed film caused by damage to the bag. Further, the second layer of poly film increases the resistance to tensile forces to protect the woven bag from tearing when the bag as a whole is lifted or tugged upon.

A laminated and woven bag provides enhanced barrier properties preventing the contents intended for containment in the bag from attacking the print surface. This previous invention would make a film layer as a composite of combined two films adhesive laminated or poly laminated together and forming respective barriers to isolate the ink therebetween.

The adhesive is provided by a thermoplastic or pre-polymerized thermoset adhesive material, transparent, translucent, opaque, semi-opaque, possessing color or lacking color, that is spread into a thin layer and activated to an adhesive state by one or more of, heat, pressure sensitivity or polymerization from a pre-polymerized state, for example, by extrusion, and then placed between the first printed poly film and the second poly film to form the composite.

The poly laminate comprises a thermoplastic or pre-polymerized thermoset polymer film that is supplied as a thin layer, then placed between the first printed poly film and the second poly film, followed by being activated to an adhesive state similarly as is the adhesive material, described herein. Advantageously, this previous invention eliminates the risk of cross contamination of inks and contents intended for woven bag contents. Moreover, this previous invention allows for risk free utilization of water based inks when packaging hot filled or greasy food products in woven bags. The composite protects the ink from abrasion by the woven bag.

The product is a multi layer bag embodiment comprising an outer layer of a reverse printed clear film (with a thickness in a range of about 9 microns to about 150 microns, including, but not limited to a preferred thickness of about 18 microns) adhesive laminated (with about 0.2268 to 9.0718 kg per 278.709 m² (0.5 to 20 pounds per 3,000 sq feet) of adhesive to another film (clear, colored, metallized, or treated in some way), (with a thickness in a range of about 9 microns to about 150 microns, including, but not limited to a preferred thickness of about 18 microns). The film lamination is then poly laminated (with about 2.26795 to about 13.6077 kg (about 5 to about 30 pounds) of poly per 278.709 m² (3,000 sq feet)) to a woven mesh tube or flat sheet (with a basis weight of about 13.6077 to about 45.359 kg (about 30 to about 100 pounds) per 278.708 m² (3,000 sq feet) of a single ply of woven). The material is then formed or cut into a bag.

The final structure is film/print/adhesive/film/poly/woven. The adhesive layer also could be a poly layer (of about 2.26795 to 13.6077 kg per 278.709 m² (5 to 30 pounds per 3,000 sq feet)) resulting in a structure film/print/poly/film/poly/woven. All product weights are based on a single layer of the structure, i.e., if it is a tube, it is one side or layer of the tube.

### BRIEF DESCRIPTION OF THE DRAWINGS

FIG. 1 is a schematic view of a manufacturing apparatus performing a method of making a composite having a transparent outer film having a printed area that repeats along a continuous length of the film, an adhesive layer and another film adhered by the adhesive layer to the outer film.
FIG. 2 is a schematic view of a manufacturing apparatus performing a method for making a woven bag from the composite of Fig. 1 and woven bag material.
FIG. 3 is a schematic view in cross section of one embodiment of a woven bag.
FIG. 4 is a schematic view in cross section of another embodiment of a woven bag.
FIG. 5 is a schematic view similar to Fig. 2 of a manufacturing apparatus performing a method for making an embodiment of a woven bag according to the present invention.

### DETAILED DESCRIPTION

US 2007/0140600 A1, U.S. Patent Application No. 11/538,838, filed on October 5, 2006, discloses a woven bag laminated to a reverse printed film. Prior to the previous invention of the proprietor, the known method of making a product was reverse printing a film and poly laminating it to a woven bag material. However, this can cause ink smear when the moisture or grease of the product within or while filling the bag migrates through the woven bag material to contact and re-liquefy the water based ink. This issue was addressed in the previous invention of the proprietor as described below.

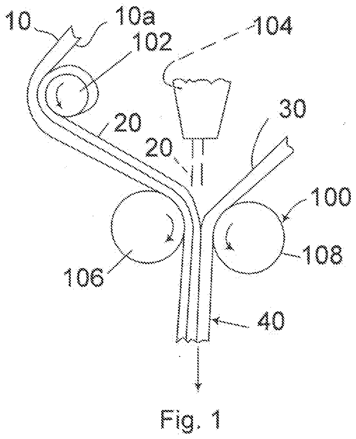

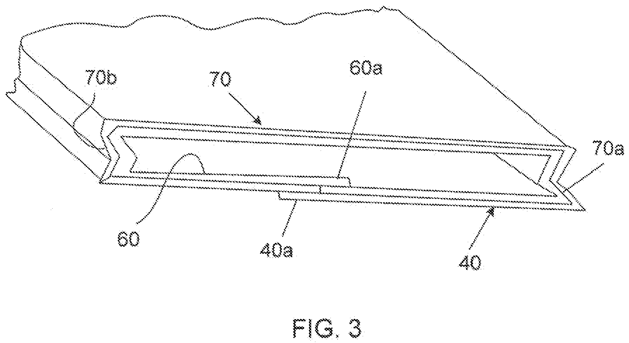

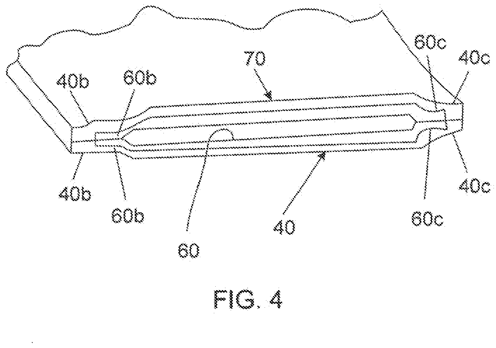

Fig. 1 discloses a portion of a transparent continuous poly film 10 having a reverse printed area 10a. The printed area 10a repeats along a length of the continuous poly film 10 to correspond with each bag or package 70, Figs. 3 and 4, that is formed, in part, by the continuous film 10. The repeated reverse printed area 10a is bounded by an unprinted top margin forming a top of a bag type package 70, an unprinted bottom margin forming a bottom of the bag type package 70 and unprinted side margins 40b, 40c.

Each repeated printed area corresponds to a printed area on a woven bag product 70, in one embodiment having the printed area visible on at least one broad side or front of the bag 70 and, in another embodiment, preferably on both sides, front and back, of the bag 70. In a further embodiment, the printed area extends over sides 70a, 70b of the bag 70, which sides 70a, 70b expand and contract with the amount of contents within the bag 70.

Fig. 1 discloses an apparatus 100 for making a composite 40. The composite 40 comprises the reverse printed film 10 having the printed area 10a, an adhesive layer 20 or tie layer applied to the printed side of the reverse printed film 10 by an adhesive applicator roller 102 of the apparatus 100. Alternatively, the adhesive layer 20 comprises a poly laminate 20 extruded as a heated film or sheet from an extruder 104 shown in phantom outline. The film 10 can be printed utilizing ink 10a with a solvent based carrier (called solvent printing) or utilizing a water based carrier (called water based printing). Water based printing has been growing in use over the past decade due to the need to reduce ink solvent emissions and waste treatment. Printers utilizing solvent based printing need solvent recovery systems or incinerators to burn off excess solvent rather than emitting it to the environment. These solvents like toluene are known carcinogens. Printing with water based inks 10a causes little or no solvent emissions and is better for the environment. However when making bags 70, Figs. 3 and 4, for foods that are packaged hot (+32.2 °C (+90°F)) or that have excess grease (mainly animal feeds like dog food) the water based ink 10a can be attacked by water vapor or grease migrating from the bag contents. This will cause the ink 10a to degrade and run or smear when contacted by and mixed with moisture vapor. The result is smeared printing 10a. Further, the ink 10a and the migrating bag contents cross contaminate one another.

Fig. 1 discloses laminating nip rollers 106, 108 of the apparatus 100, which counter rotate to apply pressure and necessary heat to an adherent state temperature to laminate the layers 10, 10a, 20 and 30 and form the flexible composite 40.

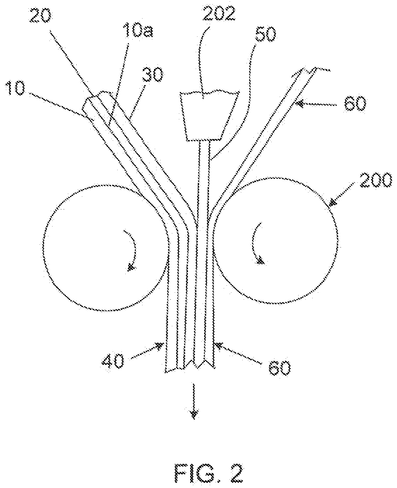

By making a bag 70, Figs. 3 and 4, having a composite 40 that comprises a reverse printed film 10 laminated to another layer of film 30 the print 10a is now confined between the two film layers 10, 30 so that it is isolated between the two films 10, 30 from mutual cross contamination and attack by moisture or grease. Further, the print 10a is protected by an intervening film 30 from abrasion by the woven bag material 60, Figs. 2, 3 and 4, that forms an enclosure to contain the bag contents.

A preferred embodiment of the previous invention comprises: printed clear poly film 10 (with a thickness in a range of about 9 microns to about 150 microns, including, but not limited to a preferred thickness of about 18 microns) adhesive or poly laminated (with about 0.2268 kg to about 9.0718 kg (about 0.5 to about 20 pounds) of adhesive 20 or alternatively, poly laminate 20, per 278.709 m² (3,000 sq feet) of film) to another film 30, for example, (clear, colored, metallized, or treated in some way), (with a thickness in a range of about 9 microns to about 150 microns, including, but not limited to a preferred thickness of about 18 microns).

In Fig. 2, the film lamination comprises a composite 40 that is then poly laminated by an apparatus 200 (with about 2.26795 to about 13.6077 kg (about 5 to about 30 pounds) of poly laminate 50 or, alternatively, adhesive layer 50, per 278.709 m² (3,000 sq feet)) applied as a heated film or sheet of poly laminate by an extruder 202 of the apparatus 200, to a woven mesh tube 60 or flat sheet 60 (with a basis weight of about 13.6077 to about 45.359 kg (about 30 to about 100 pounds) per 278.709 m² (3,000 sq feet) of a single ply of woven). Alternative to the poly laminate 50, an adhesive layer 50 is applied by another applicator roller similar to the applicator roller 102 shown in Fig. 1. All product weights are based on a single layer of the structure, i.e. if it is a tube it is one side or layer of the tube. The material structure is then formed or cut into a bag 70. The final structure comprises, film 10/print 10a/adhesive 20 or poly 20/film 30/poly 50 or adhesive 50/ woven bag material layer 60.

An alternative embodiment of the previous invention replaces the adhesive layer 20 with about 2.26795 to about 13.6077 kg (about 5 to about 30 pounds) per 0.92903 m² (square feet) of poly 20. The resulting structure comprises the successive layers of film 10/print 10a/poly 20/film 30/poly 50/woven bag material layer 60.

Another alternative embodiment of the previous invention replaces the poly layer 50 with an adhesive layer 50 (about 0.2268 kg to about 9.0718 kg (about 0.5 to about 20 pounds) per 278.709 m² (3,000 sq ft)). The resulting structure comprises film 10/print 10a/adhesive 20/film 30/adhesive layer 50/woven bag material layer 60.

A best mode process for carrying out the previous invention is to reverse print the printed matter 10a, on film 10 on a wide web press, then lamination of the reverse printed film 10 to another film 30 utilizing an adhesive laminator (EB, electron beam, solvent-less, water-based or other), and then lamination of the laminated film composite 40 to the woven bag material 60 using a poly extruder laminator 202. The alternatives use either the poly extruder laminator 202 for both laminations, Figs. 1 and 2, or the adhesive laminator 104 for both laminations, Figs. 1 and 2.

A first polymer film 10 includes, but is not limited to, one of, an oriented polypropylene, OPP, or oriented polyethylene, OPE, biaxial oriented polypropylene, BOPP, or biaxial oriented polyethylene, BOPE, polyester, PET, or other polymer film having an unprinted side with a matt finish or shiny finish, and an opposite side of the same film adapted for printing 10a thereon by being treated, for example, corona, flame, chemical or plasma treatment to increase the adherence of printing inks. The film 10 is reverse printed with printed matter 10a, text and graphics, in reverse or mirror image orientation, which is viewed in a readable orientation by looking through the unprinted side of the transparent first film 10.

The printing operation comprises, reverse printing the treated side of the first film 10 with a printer apparatus including but not limited to, flexographic, rotogravure or other printer apparatus, with a printing image width of about 635-1905 mm (25-75 inches) and an individual repeat length corresponding to the span of successive bags 508-1270 mm (20-50 inches) each, and joined side-to-side or end-to-end along a continuous length of the first film 10. The printing image 10a comprises various text and/or graphics, suitable to print one or both sides of a bag 70 at once. From the printer the first film 10 is wound onto a take up reel (not shown).

A second polymer film 30 comprised of a polymer material similar to the material of the first film 10 is laminated over the reverse printed matter 10a on the treated side of the first film 10. The second polymer film 30 is commercially available as transparent, white or metallized with imbedded metal particles. An adhesive laminator machine 100, commercially available from NORDMECCANICA GROUP, FEUSTERTEL or DCM, for example, includes but is not limited to, a solvent less adhesive laminator machine or electron beam, EB, adhesive laminator machine that applies an adhesive 20 including, but not limited to, a solvent less polyurethane adhesive or EB (electron beam) radiation cured acrylate adhesive 20 to the surface of either the first film 10 or the second film 30. The second film 30 is laminated against the printed side of the first film 10, including but not limited to the use of nip rollers 106, 108 at an elevated temperature as required by the adhesive manufacturer to activate the adhesive to an optimum adherent state.

A tubular woven bag material 60 or fabric provides a reinforcing mesh for the bag 70. For example, the fabric 60 comprises a uniform weight and poly profile in the machine direction and cross direction.

For example, the mesh 60 comprises, about 10x10 picks per inch (2.54 cm) of warp and weft yarns of about 850 Denier (850g per 9000 meters) minimum, low density polyethylene about 60% resin blended copolymer with about 40% polypropylene resin, the mesh having a polymer basis weight of about 16.6 and a coefficient of friction of about 0.5 as measured by the inclined plane method. The tubular woven mesh has a total basis weight range of about 72.3 - 78.9 gm/m², including preferably a basis weight of about 75.6 gm/m².

Fig. 2 discloses, an extrusion laminate of either side of the woven bag material 60 laminated to the untreated, unprinted plain side of the laminated composite 40. The woven bag adhesion withstands about 300 grams minimum force.

Fig. 3 discloses an embodiment of a bag 70, product or package, in which the woven bag material 60 is in the form of a single layer tube, such that the tube has an overlap seam 60a or alternatively is a seamless tube without an overlap seam 60a. The composite 40 comprises a single piece having an overlap seam 40a. The bag 70 is shown partially open for purposes of illustration. During lamination, the bag 70 is formed while collapsed and flat. After laminating together the composite 40 and the woven bag material 60, they are cut to a length that corresponds to the length of an individual bag 70. An individual bag 70 will have open ends. Either or both open ends of the individual bag 70 are capable of being closed and sealed in a similar fashion as disclosed by Fig. 4, wherein Fig. 4 depicts margins 60b, 60c of the woven bag 60 joined together, and margins 40b, 40c of the composite 40 joined together, by melt bonding together under heat and pressure, or by the addition of adhesive to adhesive bond together.

Fig. 4 discloses an embodiment of a bag 70, product or package, in which the woven bag material 60 is in the form of a flat sheet of fabric, which is slit to form two pieces with side margins 60b and 60c. The two pieces are laminated to each other along the side margins 60b and 60c. The composite 40 is slit to form two pieces covering the two opposite sides of the woven bag material 60. The two pieces of the composite 40 are laminated to the sides of the woven bag material 60, and further are laminated together along their side margins 40b and 40c. The bag 70 is shown partially open for purposes of illustration. During lamination, the bag 70 is formed while collapsed and flat. The side margins 40b and 40c are trimmed to size. The side margins 60b and 60c are trimmed to size if necessary. After laminating together the composite 40 and the woven bag material 60, they are cut to a length that corresponds to the length of an individual bag 70. An individual bag 70 will have open ends, either one or both of which are capable of being closed. By way of example, either or both open ends of the individual bag 70 are capable of being closed along margins adjacent the open ends in a similar fashion as disclosed by Fig. 4, wherein Fig. 4 depicts margins 60b, 60c of the woven bag 60 joined together, and margins 40b, 40c of the composite 40 joined together, by melt bonding together under heat and pressure, or by the addition of adhesive to adhesive bond together.

Each of the films according to the embodiments of the previous invention resides in an unreinforced, heavy duty film of sufficient flexural modulus to form a flexible bag of sufficient tensile strength and sliding friction constant, elongation resistance, abrasion resistance and impact resistance at ambient temperatures, which is particularly suited for rough handling of bulk food quantities during shipment and storage. Further, the polymer and film have no solvent at room temperature, are sensitized for printing, and are heat, water and moisture resistant, staining resistant, and chemical resistant to organic chemicals particularly present in bulk food, including but not limited to dog food and birdseed, and further, including but not limited to grains, cereals, oils, grease, gravies and sauces. Accordingly, the polymer and film of the bag are particularly suited for heavy bulk food storage and rough handling during shipment and storage. The outer film is capable of being printed with printing ink of water based solvent of low toxicity and low environmental impact when incinerated or recycled. According to an embodiment of the previous invention one or more of the films comprise heavy duty polypropylene.

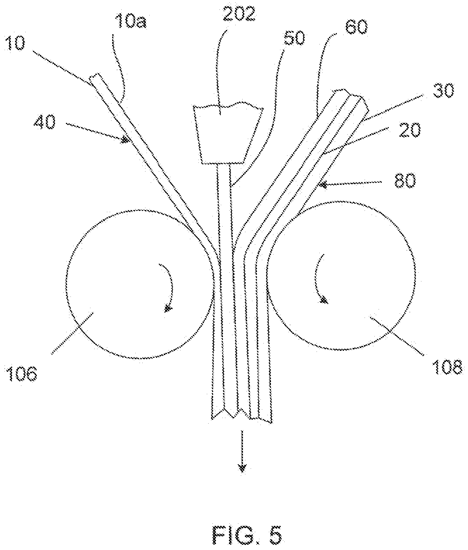

Fig. 5 discloses an embodiment according to the present invention of the composite 40 that includes the film 10 having the reverse printed area 10a, which provides a first composite 40. A second composite 80 includes the woven bag material 60 and the film 30 and the adhesive layer 20 laminating the film 30 to an interior surface of the woven bag material 50. The adhesive layer 20 is provided onto the film 30 similarly as disclosed by Fig. 1 by the extruder or adhesive laminator 104. Another adhesive layer 50 is provided by the extruder or adhesive laminator 202 to laminate the composite 40 to an exterior facing surface of the woven bag material 60 of the composite 80. The adhesive laminator 202 laminates the composite 40 to a woven bag material 60 of flat sheet. The extruder 202 laminates the composite 40 to a woven bag material 60 of the composite 80 firmed into a tube with a seam similarly as the seam 60, Fig. 3.

Disclosed by Fig. 5 is a first composite 40. Further, the woven bag material 60 is included as part of the second composite 80 of Fig. 5, such that the film 30 and the adhesive layer 20 are laminated on an interior facing surface of the woven bag material 60 to be inside the bag 70. A bag 70 is formed having the film 10 having the reverse printed area 10a, the adhesive layer 50 laminated on an exterior facing surface of the woven bag material 60, and the layer of adhesive 20 and the film 30 laminated on an interior facing surface of the woven bag material 60. In Fig. 3, the woven bag material 60 is in the form of a single layer tube, such that the tube has an overlap seam 60a, or alternatively is a seamless tube without an overlap seam 60a. In Fig. 5, the woven bag material 60 is part of the composite 80 formed into a tube that has an overlap seam 60a, similarly in Fig. 3. The first composite 40 comprises a single piece having an overlap seam 40a similarly in Fig. 3. During lamination in Fig. 5, the bag 70 is formed while collapsed and flat. After laminating together the composite 40 and the composite 80 are cut to a length that corresponds to the length of an individual bag 70. The bag 70 is shown partially open for purposes of illustration.

Alternatively, the woven bag material 60 as a part of the second composite 80 in Fig. 5 is in the form of a flat sheet of woven fabric, which is slit to form two pieces with side margins 60b and 60c, similarly as the woven bag material 60 is slit as disclosed in Fig 4. The two pieces of the second composite 80 are laminated to each other along the side margins 60b and 60c. The first composite 40 is slit to form two pieces covering the two opposite sides of the woven bag material 60 of the second composite 80. The two pieces of the first composite 40 are laminated to the sides of the woven bag material 60 of the second composite 80, and further are laminated together along their side margins 40b and 40c similarly in Fig. 4.

The second polymer film 30 is stiffer than the adhesive layer 20 , the adhesive layer 50 and the flexible, woven bag material 60. The second polymer film 30 having the first adhesive layer 20 thereon supports the interior facing surface of the woven bag material from inside the bag 70, to prop up the bag 70 while the bag 70 is open and standing upright, which is especially advantageous while filling the bag 70 with contents while the bag is open and standing upright. The second polymer film 30 having the first adhesive layer 20 thereon supports the interior facing surface of the woven bag material from inside the bag 70 to prevent the woven bag material 60 from slumping or collapsing.

The printing 10a is buried between two layers of polymer film 10 and 30 to protect the print by providing a higher barrier to moisture and grease cross contamination, in addition to providing a supplemental barrier layer for the bag to resist opening of the bag by penetration of the printed film caused by damage to the bag. Further, the second layer of poly film 30 increases the resistance to tensile forces to protect the woven bag from tearing when the bag as a whole is lifted or tugged upon.

A laminated polymer film and woven bag preferably provides enhanced barrier properties preventing the contents intended for containment in the bag from attacking the print surface 10a. The present invention would make a film layer as a composite of combined two films 10 and 30 adhesive laminated or poly laminated to each other and to an outside surface of a woven bag material 60, Figure 2, or alternatively, laminated to the outside surface and inside surface, respectively, of a woven bag material 60, Figure 5, and forming respective barriers to isolate the ink therebetween.

This description of the exemplary embodiments is intended to be read in connection with the accompanying drawings, which are to be considered part of the entire written description. Weights, measurements and coefficients are expressed as nominal values including values equal to the expressed values and values about the expressed values. In the description, relative terms such as "lower," "upper," "horizontal," "vertical,", "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description and do not require that the apparatus be constructed or operated in a particular orientation. Terms concerning attachments, coupling and the like, such as "connected" and "interconnected," refer to a relationship wherein structures are secured or attached to one another either directly or indirectly through intervening structures, as well as both movable or rigid attachments or relationships, unless expressly described otherwise.

## Claims

1. A woven bag comprising:
- an exterior, first polymer film (10);
- an interior facing surface of the first polymer film (10) having reverse printed matter (10a) thereon;
- a woven bag material (60);
- a second polymer film (30) laminated with a first adhesive layer (20) thereon and laminated by the first adhesive layer (20) to an interior facing surface of the woven bag material (60),
- a second adhesive layer (50) laminating the woven bag material (60) and the interior facing surface of the first polymer film (10) having the reverse printed matter (10a) thereon; and
- the second polymer film (30) laminated with the first adhesive layer (20) thereon supports the interior facing surface of the woven bag material (60) preventing the woven bag material from slumping or collapsing while the bag is open and standing upright.

2. The woven bag according to claim 1, wherein the second polymer film (30) is stiffer than the first adhesive layer (20), the second adhesive layer (50) and the woven bag material (60).

3. Method for the production of a woven bag according to claim 1 or claim 2, including the steps of:
- providing a first composite (40) including the film (10) having the reverse printed area (10a) thereon,
- providing a second composite (80) including the woven bag material (60) and the film (30), wherein the adhesive layer (20) laminates the film (30) to an interior surface of the woven bag material (60), and
- applying the adhesive layer (50) by an extruder or adhesive laminator (202) to laminate the composite (40) to an exterior facing surface of the woven bag material (60) of the composite (80).

## Patentansprüche

1. Gewebter Sack, beinhaltend:
- einen äußeren, ersten Polymerfilm (10);
- eine innere Deckfläche des ersten Polymerfilms (10) mit darauf befindlichem Umkehrdruck (10a);
- ein gewebtes Sackmaterial (60);
- einen zweiten Polymerfilm (30), der mit einer ersten Klebstoffschicht (20) darauf laminiert ist und durch die erste Klebstoffschicht(20) auf eine innere Deckfläche des gewebten Sackmaterials laminiert ist,
- eine zweite Klebstoffschicht (50), die das gewebte Beutelmaterial (60) und die innere Deckfläche des ersten Polymerfilms (10) mit dem Rückseitendruck (10a) darauf laminiert; und
- die zweite Polymerfolie (30), die mit der ersten Klebstoffschicht (20) darauf laminiert ist, die innere Deckfläche des gewebten Sackmaterials stützt und verhindert, dass das gewebte Sackmaterial (60) zusammensackt oder zusammenfällt, während der Sack offen ist und aufrecht steht.

2. Gewebter Sack nach Anspruch 1, wobei der zweite Polymerfilm (30) steifer ist als die erste Klebstoffschicht (20), die zweite Klebstoffschicht (50) und das gewebte Sackmaterial (60).

3. Verfahren zur Herstellung eines gewebten Sackes nach Anspruch 1 oder Anspruch 2, umfassend die Schritte des
- Bereitstellens eines ersten Verbundstoffs (40), der den Film (10) mit der Umkehrdruckfläche (10a) darauf enthält,
- Bereitstellens eines zweiten Verbundmaterials (80), das das gewebte Sackmaterial (60) und den Film (30) umfasst, wobei die Klebstoffschicht (20) den Film (30) an eine Innenfläche des gewebten Sackmaterials (60) laminiert, und
- Aufbringens der Klebstoffschicht (50) auf die Folie (30) durch einen Extruder oder einen Klebstofflaminator (202), um den Verbundstoff (40) auf eine äußere Deckfläche des gewebten Sackmaterials (60) des Verbundstoffs (80) zu laminieren.

## Revendications

1. Sac tissé, comprenant :
- un premier film polymère extérieur (10) ;
- une surface orientée vers l'intérieur du premier film polymère (10) comportant un imprimé inversé (10a) sur celle-ci ;
- un matériau de sac tissé (60) ;
- un second film polymère (30) contrecollé avec une première couche d'adhésif (20) et contrecollé par la première couche d'adhésif (20) sur une surface orientée vers l'intérieur du matériau de sac tissé (60) ;
- une seconde couche d'adhésif (50) qui contrecolle le matériau de sac tissé (60) et la surface orientée vers l'intérieur du premier film polymère (10) comportant l'imprimé inversé (10a) sur celle-ci ; et
- le second film polymère (30) contrecollé avec la première couche d'adhésif (20) sur celui-ci supporte la surface orientée vers l'intérieur du matériau de sac tissé (60), empêchant le matériau de sac tissé de s'affaisser ou de s'effondrer lorsque le sac est ouvert et en position verticale.

2. Sac tissé selon la revendication 1, dans lequel le second film polymère (30) est plus rigide que la première couche d'adhésif (20), que la seconde couche d'adhésif (50) et que le matériau de sac tissé (60).

3. Procédé de production d'un sac tissé selon la revendication 1 ou la revendication 2, comprenant les étapes consistant à :
- fournir un premier composite (40) comprenant le film (10) comportant la région imprimée inversée (10a) sur celui-ci ;
- fournir un second composite (80) comprenant le matériau de sac tissé (60) et le film (30), dans lequel la couche d'adhésif (20) contrecolle le film (30) sur une surface intérieure du matériau de sac tissé (60) ; et
- appliquer la couche d'adhésif (50) à l'aide d'une extrudeuse ou d'une contrecolleuse d'adhésif (202) afin de contrecoller le composite (40) sur une surface orientée vers l'extérieur du matériau de sac tissé (60) du composite (80).
